# EUROPEAN PATENT APPLICATION

(11) **EP 4 450 473 A1**
(43) Date of publication of application: **23.10.2024**
(21) Application number: 23315086.1
(22) Date of filing: 19.04.2023
(51) Int. Cl.: C04B 28/14, C04B 38/10

(54) **A PROCESS FOR THE MANUFACTURE OF A PLASTERBOARD**

(71) Applicant: SAINT-GOBAIN PLACO, 92400 Courbevoie (FR)
(72) Inventor: Decabooter, Célia, 92400 Courbevoie (FR); Jaffel, Hamouda, 92400 Courbevoie (FR); Mazouzi, Riles, 92400 Courbevoie (FR)
(74) Representative: Murgitroyd & Company

(57) **Abstract**

A process for the manufacture of a plasterboard, the process comprising: forming a calcium sulphate slurry by mixing water, calcium sulphate material, an aqueous foam comprising an aqueous surfactant composition comprising an alkyl sulphate, a coalescing agent, and a hydrophobic material; depositing the slurry to form a board precursor; and drying the board precursor to form a plasterboard. In this way, the coalescing agent can mitigate the effects of the hydrophobic material to produce a plasterboard with an improved foam efficiency.

## Description

### Field of the Disclosure

The present disclosure generally relates to the field of plasterboards and finds, in particular, utility in providing plasterboard comprising a hydrophobic material.

### Background

The pore structure of plasterboards affects their mechanical properties.

Sometimes, it is desirable to use a hydrophobic material in plasterboard formulation and manufacture to facilitate manufacturing. Using a hydrophobic material can provide improved slurry properties and product performance compared to slurries and plasterboards without hydrophobic materials. The improved slurry properties can include better stability and enhanced control of material feeding, dosing and flowability. Additionally, the improved slurry properties can include an enhanced dispersion of solid particles in the slurry, the improved dispersion enabling a higher homogeneity in the final calcium sulphate products. The improved product performances can include increased moisture resistance and improved calcium sulphate product shrinkage during fire propagation.

However, there are challenges when using hydrophobic materials to produce moisture-resistant plasterboards. Hydrophobic materials may affect the stability of foams used in the slurry during the manufacturing process and the pore structure of the formed plasterboard. More foaming agents can be added to the slurry mixture to mitigate the effects of the hydrophobic materials. However, increasing the use of the foaming agent itself can influence the pore size, potentially negatively affecting the mechanical properties of the plasterboard.

Separately, it is desirable to use recycled calcium sulphate in new plasterboards. Such an approach is key to reducing wastage within the industry and achieving recycling goals. However, it is challenging to recycle calcium sulphate boards to produce new calcium sulphate products without the new calcium sulphate product including the materials in the recycled board. The presence of the materials within the recycled board is often unknown and undoubtedly difficult to quantify.

Increasing the amount of recycled material used to manufacture new calcium sulphate boards results in a concomitant increase in the possibility of the recycled materials themselves containing a hydrophobic material. The effect of hydrophobic materials on the pore structure of calcium sulphate boards is significant, even when the hydrophobic materials are present in low amounts.

The effect of the recycled calcium sulphate-containing hydrophobic materials can be compounded when using those materials to produce moisture-resistant calcium sulphate boards. In such boards, hydrophobic materials may be present in the recycled calcium sulphate and the new composition itself. The hydrophobic materials in the recycled calcium sulphate and the new composition will affect the stability of the manufacturing process and the resulting foam pore structure of the new calcium sulphate board.

Aspects of the present disclosure seek to provide a process for making calcium sulphate boards that alleviates these problems with prior known systems. In particular, aspects of the present disclosure seek to provide a process for making calcium sulphate boards using hydrophobic materials.

### Summary

According to a first aspect of the present disclosure, there is provided a process for the manufacture of a plasterboard, the process comprising: forming a calcium sulphate slurry by mixing water, calcium sulphate material, an aqueous foam comprising an aqueous surfactant composition comprising an alkyl sulphate, a coalescing agent, and a hydrophobic material; depositing the slurry to form a board precursor; and drying the board precursor to form a plasterboard. In this way, the coalescing agent can mitigate the effects of the hydrophobic material to produce a plasterboard with an improved foam efficiency.

A coalescing agent influences the individual bubble size in the slurry while retaining the overall bubble volume in the slurry.

Preferably, the calcium sulphate material comprises recycled calcium sulphate material. In this way, a plasterboard comprising recycled calcium sulphate material with an improved foam efficiency can be produced.

Preferably, the calcium sulphate material comprises at least 1 wt.% recycled calcium sulphate material. More preferably, the calcium sulphate material comprises at least 5 wt.% recycled calcium sulphate material. Still more preferably, the calcium sulphate material comprises at least 10 wt.% recycled calcium sulphate material. Most preferably, the calcium sulphate material comprises at least 30 wt.% recycled calcium sulphate material.

In some embodiments, the hydrophobic material comprises recycled hydrophobic material within the recycled calcium sulphate material. In this way, the coalescing agent can mitigate the effects of the hydrophobic material within the recycled calcium sulphate material. For example, a plasterboard can be produced using calcium sulphate material recycled from a moisture resistant plasterboard.

Preferably, the recycled calcium sulphate material comprises at least 0.001 wt.% recycled hydrophobic material. More preferably, the recycled calcium sulphate material comprises at least 0.1 wt.% recycled hydrophobic material.

In some embodiments, the hydrophobic material comprises a hydrophobic additive introduced to the calcium sulphate slurry. Preferably, the calcium sulphate slurry comprises at least 0.001 wt.% hydrophobic additive relative to the dry weight of the calcium sulphate material. More preferably, the calcium sulphate slurry comprises at least 0.1 wt.% hydrophobic additive relative to the dry weight of the calcium sulphate material.

In some embodiments, the hydrophobic material comprises a hydrophobic additive introduced to the calcium sulphate slurry and recycled hydrophobic material within the recycled calcium sulphate material. In this way, the coalescing agent can mitigate the effects of both the recycled hydrophobic material within the recycled calcium sulphate material and the hydrophobic additive added to the slurry. As such, a plasterboard comprising a hydrophobic additive and recycled hydrophobic material can be produced with an improved foam efficiency. For example, a moisture resistant plasterboard can be produced using calcium sulphate material that has been recycled from a moisture resistant plasterboard.

Preferably, the calcium sulphate slurry comprises at least 0.001 wt.% hydrophobic material relative to the dry weight of the calcium sulphate material. More preferably, the calcium sulphate slurry comprises at least 0.01 wt.% hydrophobic material relative to the dry weight of the calcium sulphate material. Still more preferably, the calcium sulphate slurry comprises at least 0.1 wt.% hydrophobic material relative to the dry weight of the calcium sulphate material.

Preferably, the process comprises drying the board precursor to form a plasterboard having pores with an average diameter of 100 to 800 microns inclusive. More preferably, the process comprises drying the board precursor to form a plasterboard having pores with an average diameter of 150 to 600 microns inclusive. More preferably, the process comprises drying the board precursor to form a plasterboard having pores with an average diameter of 175 to 500 microns inclusive. Most preferably, the process comprises drying the board precursor to form a plasterboard having pores with an average diameter of 200 to 450 microns inclusive. In this way, a plasterboard comprising a hydrophobic material can be provided with an improved pore structure.

Preferably, the process comprises forming the calcium sulphate slurry with a foam efficiency between 50 and 100% inclusive. More preferably, the process comprises forming the calcium sulphate slurry with a foam efficiency between 60% and 80%inclusive. The foam efficiency of the samples was measured by determining the ratio between the amount of air remaining per square metre of wet board of a given thickness over the amount of air initially added to the same volume of slurry. In this way, a plasterboard with an improved foam efficiency can be produced.

Preferably, the hydrophobic additive comprises at least one material selected from the group consisting of: wax, silicone-based material, siloxane, perlite, glass fibres with hydrophobic seizing, micro-silica and metal soaps. More preferably, the hydrophobic additive comprises polymethylhydrosiloxane.

Preferably, the recycled hydrophobic material comprises at least one material selected from the group consisting of: wax, silicone-based material, siloxane, perlite, glass fibres with hydrophobic seizing, micro-silica and metal soaps. More preferably, the recycled hydrophobic material comprises polymethylhydrosiloxane.

Preferably, the hydrophobic material comprises at least one material selected from the group consisting of: wax, silicone-based material, siloxane, perlite, glass fibres with hydrophobic seizing, micro-silica and metal soaps. More preferably, the hydrophobic material comprises polymethylhydrosiloxane.

Preferably, the silicone-based material comprises a reticulated siloxane. More preferably, the reticulated siloxane comprises a reticulated siloxanes with a T-pattern structure and/or a silsesquioxane structure.

Preferably, the calcium sulphate slurry further comprises a surfactant selected from the group consisting of: a styrene/maleic acid copolymer, a alcohol alkoxylate, an acetylenic diol, a monoalkylpolyalkylene, an alkylethersulfonate, and an alkyl ether carboxylate. Preferably, the alcohol alkoxylate is an alcohol ethoxylate R¹⁰-(EO)-H with R¹⁰ being an aliphatic hydrocarbon group having from 1 to 25 carbon atoms or, an ethoxylated nonylphenol.

Preferably, the surfactant is present in an amount of 0.00002 to 0.20 wt.%, more preferably 0.0001 to 0.10 wt.% based on the total weight of the calcium sulphate material, the aqueous foam comprising the aqueous surfactant composition, the coalescing agent, and the hydrophobic material.

When the surfactant is present in the slurry of the invention, the air bubble size of the slurry can be further advantageously adjusted. Furthermore, the coalescing agent is stabilized by the presence of the surfactant.

Preferably, the coalescing agent is selected from the group consisting of: a mineral oil, a vegetable oil, a silicon oil, a silicon containing emulsion, a fatty acid, a fatty acid ester, an organic modified polysiloxane, a borate ester, an alkoxylate, a polyoxialkylene copolymer, ethylene oxide (EO)-propylene oxide (PO) block polymer, acetylenic diols, and a phosphoric ester having the formula P(O) (O-R¹)₃₋ₓ(O-R²)ₓ wherein P represents phosphorus, O represents oxygen and R¹ and R² are independently a C₂-C₂₀ alkyl, preferably a C₂-C₈ alkyl, or an aryl group and x = 0, 1, 2.

Preferably, the coalescing agent comprises at least one compound selected from the group consisting of a trialkyl phosphate, polyoxypropylene copolymer, glycerol/alcohol acetate, ethylene oxide (EO)-propylene oxide (PO) block polymer, or mixtures thereof. More preferably, the coalescing agent comprises a trialkyl phosphate. Preferable trialkyl phosphates are triisobutyl phosphate, tri-n-butyl-phosphate, triphenyl phosphate, triethyl phosphate, and tripropyl phosphate. Most preferably, the coalescing agent comprises, preferably consists of, triisobutyl phosphate.

Preferably, the process comprises adding the coalescing agent to the calcium sulphate slurry in an amount of 0.0005 wt.% to 0.5 wt.% inclusive relative to the calcium sulphate material. More preferably, the process comprises adding the coalescing agent to the calcium sulphate slurry in an amount of 0.001 wt.% to 0.5 wt.% inclusive relative to the calcium sulphate material. More preferably, the process comprises adding the coalescing agent to the calcium sulphate slurry in an amount of 0.002 wt.% to 0.01 wt.%. Preferably, the process comprises adding the coalescing agent in a ratio between 1:80 to 2:1 relative to the aqueous surfactant composition comprising an alkyl sulphate. More preferably, the process comprises adding the coalescing agent in a ratio between 1:60 to 1:2 relative to the aqueous surfactant composition comprising an alkyl sulphate. Preferably, the process comprises adding the aqueous surfactant composition comprising an alkyl sulphate to the calcium sulphate slurry in an amount to provide a slurry comprising an alkyl sulphate in an amount of between 0.01 wt.% and 0.5 wt.% inclusive relative to the dry weight of the calcium sulphate material. Preferably, the aqueous surfactant composition comprising an alkyl sulphate comprises two or more alkyl sulphates.

Preferably, the calcium sulphate slurry further comprises a fluidiser. In this way, the fluidity of the slurry is improved which allows for easier manufacture of the plasterboard. Preferably, the process comprises adding the fluidiser to the calcium sulphate slurry in an amount of between 0.1 wt.% and 1 wt.% inclusive relative to the dry weight of the calcium sulphate material.

In some embodiments, the coalescing agent is mixed with the aqueous surfactant composition comprising an alkyl sulphate before air is added to form the foam. In some embodiments, the coalescing agent is mixed with the foam before the foam is mixed with the calcium sulphate material and water. In some embodiments, the coalescing agent is mixed with the calcium sulphate material, water and hydrophobic additive before the foam is added to the slurry.

Preferably, the process further comprises measuring the average pore size diameter of the plasterboard and varying the amount of coalescing agent used if the average pore size is outside of a target range.

Preferably, the process further comprises measuring the average pore size diameter of the plasterboard and increasing the amount of coalescing agent used if the average pore size is below a target range.

Preferably, the process further comprises measuring the average pore size diameter of the plasterboard and decreasing the amount of coalescing agent used if the average pore size is above of a target range.

Preferably, the target range is 100 to 800 microns inclusive. More preferably, the target range is 150 to 600 microns inclusive. Still more preferably, the target range is 175 to 500 microns inclusive. Yet more preferably, the target range is 200 to 450 microns inclusive.

Preferably, the process further comprises the step of adding at least one accelerator. Preferably, the accelerator is selected from the list consisting of potassium sulphate, an organic phosphonic compound, a phosphate-containing compound, and accelerator comprising calcium sulphate dihydrate and sugar, preferably the accelerator comprises calcium sulphate dihydrate and sugar. In this way, the setting time of the plasterboard can be reduced.

Preferably, the process further comprises the step of adding at least one retarder. Preferably, the retarder is selected from the list consisting of citric acids and polyamides. In this way, the setting time of the plasterboard can be increased.

Preferably, the process further comprises the step of adding at least one habit modifier. Preferably, the habit modifier is selected from the list consisting of polycarboxylate, polycarboxylic ether, polyphosphate, lignosulfonate, naphthalene, beta-naphthalene sulfonate, naphthalene sulfonate formaldehyde condensate and sodium naphthalene sulphate formaldehyde condensate.

Preferably, the water gauge of the calcium sulphate slurry is 35% to 90% inclusive.

Preferably, the process further comprises drying the board precursor to form a plasterboard having a density of 300 to 1300 kg/m³.

Preferably, the board precursor comprises at least one liner. More preferably, the board precursor comprises two liners. Preferably, at least one liner comprises a paper liner.

### Detailed Description

The following description presents particular examples and serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

Tests were carried out on Examples of the present invention and Comparative Examples not of the present invention.

Slurries were prepared with the addition of foam. The slurry samples were prepared such that they comprised 11 wt.% recycled calcium sulphate material. As such, the slurries contained 0.0125 wt.% silicone based hydrophobic material relative to the dry weight of the calcium sulphate material, all from the recycled material. In the samples, the aqueous surfactant composition comprising an alkyl sulphate used was Vinapor 3711 (BASF) and the water gauge was 69%.

The foam efficiency of the samples was measured by determining the ratio between the amount of air remaining per square metre of wet board of a given thickness over the amount of air initially added to the same volume of slurry.

The plasterboards were dried in a conventional dryer, and samples were taken from boards as they exited the dryer. The pore size within these samples was measured by cutting the plasterboard surface. The area of the pores was then determined using a picture analysis of the 2D surface. Here, the diameter of each pore observed on the cut surface was measured and weighted by its area in order to build a cumulative curve of the area weighted pore size. Here, the average pore size value used was the d50 area-weighted median pore diameter. d50 is the observed pore diameter when at the midpoint of the pore diameter distribution. The results of this analysis is set out in Table 1.

**Table 1**

| Example | Silicone Based Hydrophobic Material (relative to the dry weight of the calcium sulphate material) | Coalescing Agent "(relative to the dry weight of the calcium sulphate material) | Aqueou s surfact ant compos ition concent ration (relativ e to the dry weight of the calcium sulphat e materia l) | Ratio of Coalescing agent to aqueous surfactant composition | Average Pore size d50 (µm) | Foam efficiency |
|---|---|---|---|---|---|---|
| Example 1 | 0.0125 wt.% | 0.0019 wt.% | 0.124 wt.% | 1:64 | 186 | 71% |
| Example 2 | 0.0125 wt.% | 0.0034 wt.% | 0.136 wt.% | 1:40 | 241 | 67% |
| Example 3 | 0.0125 wt.% | 0.0043 wt.% | 0.137 wt.% | 1:32 | 245 | 66.5% |
| Comparati ve Example 1 | 0.0125 wt.% | 0% | 0.097 wt.% | N/A | 266 | 55% |
| Comparati ve Example 2 | 0.0125 wt.% | 0% | 0.128 wt.% | N/A | 171 | 72.3/ 68.5% |

The addition of the coalescing agent was not found to negatively affect the plasterboard manufacturing process. For example, no negative effects on the adhesion, setting or fluidity of the slurry were observed. Additionally, the inclusion of the coalescing agent in the slurry had no negative impact on the mechanical properties of the resulting plasterboard.

A comparison of Comparative Example 1 and Comparative Example 2 illustrates that increasing the concentration of aqueous surfactant composition present results in an increase in foam efficiency, but a decrease in pore size. Comparing Comparative Example 2 with Examples 1 to 3, it can be seen that adding coalescing agent in counterbalances the effect of the additional aqueous surfactant composition on pore size, without negatively affecting the foam efficiency. As such, it is the addition of both aqueous surfactant composition and coalescing agent that allows for the production of boards with the desired properties.

## Claims

1. A process for the manufacture of a plasterboard, the process comprising:
forming a calcium sulphate slurry by mixing water,
calcium sulphate material,
an aqueous foam comprising an aqueous surfactant composition comprising an alkyl sulphate,
a coalescing agent, and
a hydrophobic material;
depositing said slurry to form a board precursor; and
drying said board precursor to form a plasterboard.

2. The process of claim 1, wherein said calcium sulphate material comprises recycled calcium sulphate material.

3. The process of claim 2, wherein said calcium sulphate material comprises at least 1 wt.% recycled calcium sulphate material.

4. The process of claim 2 or claim 3, wherein said hydrophobic material comprises recycled hydrophobic material within said recycled calcium sulphate material.

5. The process of any one preceding claim, wherein said hydrophobic material comprises a hydrophobic additive introduced to said calcium sulphate slurry.

6. The process of claim 4 or claim 5, wherein said hydrophobic material comprises both recycled hydrophobic material within said recycled calcium sulphate material and a hydrophobic additive introduced to said calcium sulphate slurry.

7. The process of any one preceding claim, wherein said calcium sulphate slurry comprises at least 0.001 wt.% hydrophobic material relative to the dry weight of said calcium sulphate material.

8. The process of any one preceding claim, wherein said process comprises drying said board precursor to form a plasterboard having pores with an average diameter of 100 to 800 microns inclusive.

9. The process of any one preceding claim, wherein said process comprises forming said calcium sulphate slurry with a foam efficiency between 50% and 100% inclusive.

10. The process of any one preceding claim, wherein said hydrophobic material comprises at least one material selected from the group consisting of: wax, silicone-based material, siloxane, perlite, glass fibres with hydrophobic seizing, micro silica and metal soaps.

11. The process of any one preceding claim, wherein the calcium sulphate slurry further comprises a surfactant selected from the group consisting of: a styrene/maleic acid copolymer, a alcohol alkoxylate, an acetylenic diol, a monoalkylpolyalkylene, an alkylethersulfonate, and an alkyl ether carboxylate.

12. The process of any one preceding claim, wherein said coalescing agent is selected from the group consisting of: a mineral oil, a vegetable oil, a silicon oil, a silicon containing emulsion, a fatty acid, a fatty acid ester, an organic modified polysiloxane, a borate ester, an alkoxylate, a polyoxialkylene copolymer, ethylene oxide (EO)-propylene oxide (PO) block polymer, acetylenic diols, and a phosphoric ester having the formula P(O) (O-R¹)₃₋ₓ(O-R²)ₓ wherein P represents phosphorus, O represents oxygen and R¹ and R² are independently a C₂-C₂₀ alkyl, preferably a C₂-C₈ alkyl, or an aryl group and x = 0, 1, 2.

13. The process of any one preceding claim, wherein said coalescing agent comprises at least one compound selected from the group consisting of a trialkyl phosphate, polyoxypropylene copolymer, glycerol/alcohol acetate, ethylene oxide (EO)-propylene oxide (PO) block polymer, or mixtures thereof.

14. The process of any one preceding claim, wherein said process comprises adding said coalescing agent to said calcium sulphate slurry in an amount of 0.0005 wt.% to 0.5 wt.% inclusive relative to said calcium sulphate material.

15. The process of any one preceding claim, wherein said process further comprises measuring an average pore size diameter and varying the amount of coalescing agent used if the average pore size is outside of an acceptable range of 100 to 800 microns inclusive.
